(19) Europäisches Patentamt
European Patent Office
Office européen des brevets

(11) EP 0 890 615 B1

(12) EUROPEAN PATENT SPECIFICATION

(45) Date of publication and mention of the grant of the patent:
**03.05.2000 Bulletin 2000/18**

(51) Int Cl.[7]: **C08L 67/06**, C08G 63/54, C08G 63/676, C09K 19/38

(21) Application number: **97111746.0**

(22) Date of filing: **10.07.1997**

(54) **High temperature crosslinkable liquid crystalline polyester compositions**

Bei hoher Temperatur vernetzbare flüssigkristalline Polyestermischungen

Compositions réticulables à haute température à base de polyesters cristallins liquides

(84) Designated Contracting States:
**DE**

(43) Date of publication of application:
**13.01.1999 Bulletin 1999/02**

(73) Proprietor: **DAINIPPON INK AND CHEMICALS, INC.**
**Itabashi-ku Tokyo (JP)**

(72) Inventors:
- **Pithart, Cornelia, Dr.**
  **14163 Berlin (DE)**
- **Frings, Rainer Bruno Dr.**
  **12307 Berlin (DE)**
- **Haraguchi, Kazutoshi, Dr.**
  **Chiba-shi, Chiba-ken (JP)**
- **Grahe, Gerwald, Dr.**
  **14195 Berlin (DE)**

(74) Representative: **Kraus, Walter, Dr. et al**
**Patentanwälte Kraus, Weisert & Partner**
**Thomas-Wimmer-Ring 15**
**80539 München (DE)**

(56) References cited:
**DE-C- 4 411 361** **US-A- 4 654 412**

- **H.R. KRICHELDORF ET AL.: JOURNAL OF MACROMOLECULAR SCIENCE-PURE AND APPLIED CHEMISTRY, vol. A34, no. 6, 1997, pages 955-964, XP002050976**
- **P.Y. CHEN ET AL.: JOURNAL OF POLYMER SCIENCE: POLYMER CHEMISTRY EDITION, vol. 19, 1981, pages 619-627, XP002050977**
- **FOMINA, L. ET AL: "SYNTHESIS AND CHARACTERIZATION OF SOME NOVEL POLYAMIDES CONTAINING DIACETYLENE SIDE GROUPS" MACROMOLECULAR CHEMISTRY AND PHYSICS, vol. 197, no. 9, September 1996, pages 2653-2663, XP000636309**
- **W.T. MÜLLER ET AL.: MACROMOLECULES, vol. 23, no. 11, 28 May 1990, pages 2825-2829, XP002050978**
- **S.K. DIRLIKOV: HIGH PERFORMANCE POLYMERS, vol. 2, no. 1, 1990, pages 67-77, XP002050979**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 890 615 B1

## Description

The present invention relates to mixtures which comprise fusible, liquid crystalline polyesters having terephthalic units with lateral propargyloxy groups, and a co-crosslinking agent component.

Materials have for some time been sought which improve the mechanical properties of matrix polymers. Polyesters are frequently used for this task, as is described, for example, in DE 44 11 361 C1. One disadvantage of these polyesters is, however, that they cannot be immobilised within the matrix polymers or with the matrix polymer.

The object underlying the invention was accordingly to provide novel mixtures which improve the mechanical properties of matrix polymers.

It has surprisingly been found that mixtures which comprise fusible, liquid crystalline polyesters having terephthalic units with lateral propargyloxy groups and a co-crosslinking agent component, reinforce the matrix polymers, the strength of the reinforcement varying with crosslink density.

The present invention provides crosslinkable mixtures which comprise a self-crosslinking polyester comprising the repeat units A of the formula (I)

A

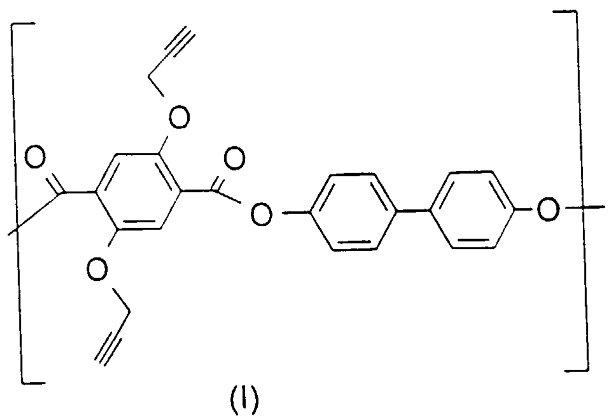

(I)

or repeat units A of the formula (I) and B of the formula (II) arranged in any desired sequence

B

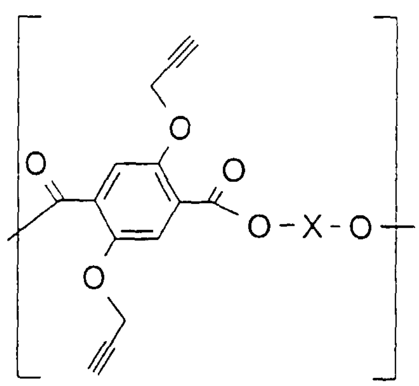

(II)

or repeat units A of the formula (I) optionally together with B of the formula (II) and C of the formula (III) arranged in any desired sequence

C

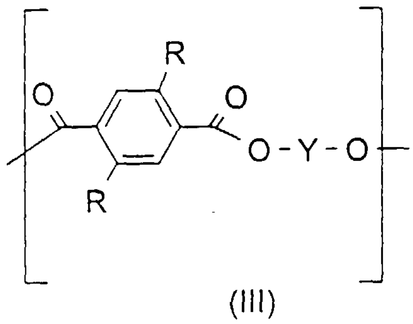

(III)

wherein R denotes H or a linear or branched alkyloxy group having 1 to 18 C atoms and X and Y each denote a different divalent alicyclic or aromatic hydrocarbon residue, which may optionally contain a heteroatom, and the molar ratio of A : (B + C) = 99:1 to 1:99, the average total number of repeat units A + B + C in the polymer molecule is in the range from 10 to 200, one of the two terminal repeat units bears a hydrogen atom on the oxy group and the other of the two terminal repeat units bears a hydroxyl group on the carbonyl group, and a co-crosslinking agent component of the formula

$$W(P)_n$$

in which n = 1 to 4, P denotes

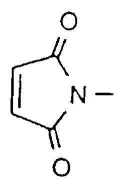 , 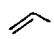 , 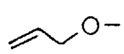 , 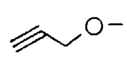

or -O-CO-CH=CH-CO-OQ and W and Q are aliphatic, aromatic or aliphatic/aromatic.

The polyester component used in the mixture according to the invention is described in the simultaneously filed European patent application, to which reference is hereby made.

As already mentioned, this polyester component is a self-crosslinking polyester comprising the repeat units A of the formula (I)

A

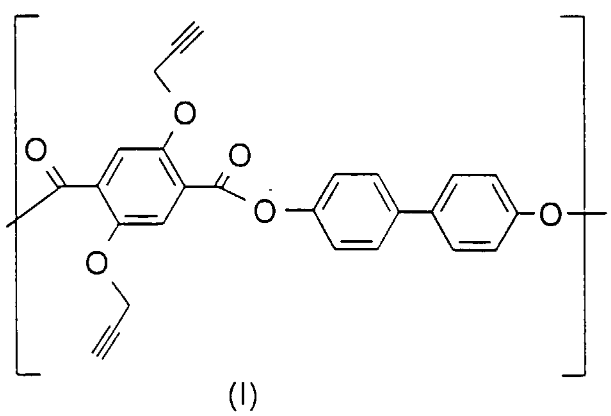

(I)

or repeat units A of the formula (I) and B of the formula (II) arranged in any desired sequence

B

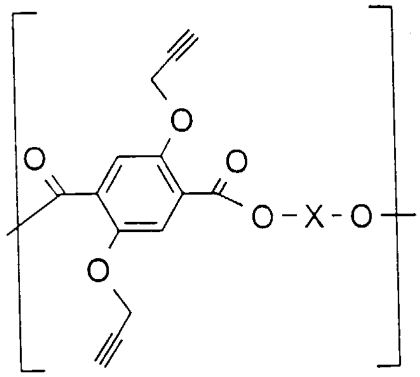

(II)

or repeat units A of the formula (I) optionally together with B of the formula (II) and C of the formula (III) arranged in any desired sequence

C

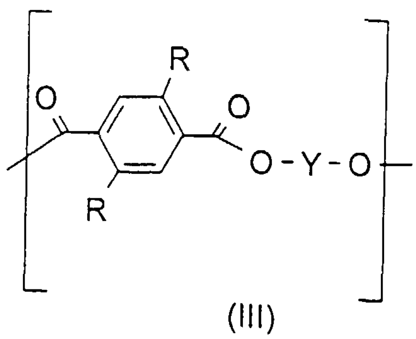

(III)

wherein R denotes H or a linear or branched alkyloxy group having 1 to 18 C atoms and X and Y each denote a different divalent alicyclic or aromatic hydrocarbon residue, which may optionally contain a heteroatom, and the molar ratio of A : (B + C) = 99:1 to 1:99, the average total number of repeat units A + B + C in the polymer molecule is in the range from 10 to 200, one of the two terminal repeat units bears a hydrogen atom on the oxy group and the other of the two terminal repeat units bears a hydroxyl group on the carbonyl group.

The divalent alicyclic or aromatic hydrocarbon residues may optionally contain heteroatoms, such as oxygen, sulphur, nitrogen, phosphorus, silicon or halogens, in particular fluorine, chlorine, bromine or iodine.

X and Y thus denote, for example, 1,1'-biphenyldiyl, 2,5-biphenyldiyl, 1,5-naphthalene-diyl, 2,3-naphthalenediyl, 2,5-naphthalenediyl, 2,6-naphthalenediyl, 2,7-naphthalenediyl, 1,4-cyclohexanediyl, 2,2'-bis(4-phenyldiyl)propane, 2,2'-bis(4-phenyldiyl)methane, 2,2'-bis(4-phenyldiyl) oxide, 2,2'-bis(4-phenyldiyl) sulphide, 2,2'-bis(4-phenyldiyl) sulphone, 4,4'-stilbenediyl, azobenzenediyl, terphenyldiyl or quaterphenyldiyl.

Should the polyesters according to the invention also contain repeat unit B and/or C in addition to repeat unit A, these are randomly distributed, wherein the proportion of repeat units A may amount to 1 to 99 mol.% and that of repeat units B alone or C alone may amount to 99 to 1 mol.%.

The formula (IV) below shows by way of example the structure of a polyester according to the invention synthesised from bis(propargyloxy)terephthalic acid, 4,4'-dihydroxybiphenyl, 2,5-bis(alkyloxy)terephthalic acid and a second diol component, wherein the average degree of polymerisation, *i.e.* the sum of m + n, is an integer from 10 to 200, advantageously from 50 to 150, and repeat units A and C may be randomly distributed

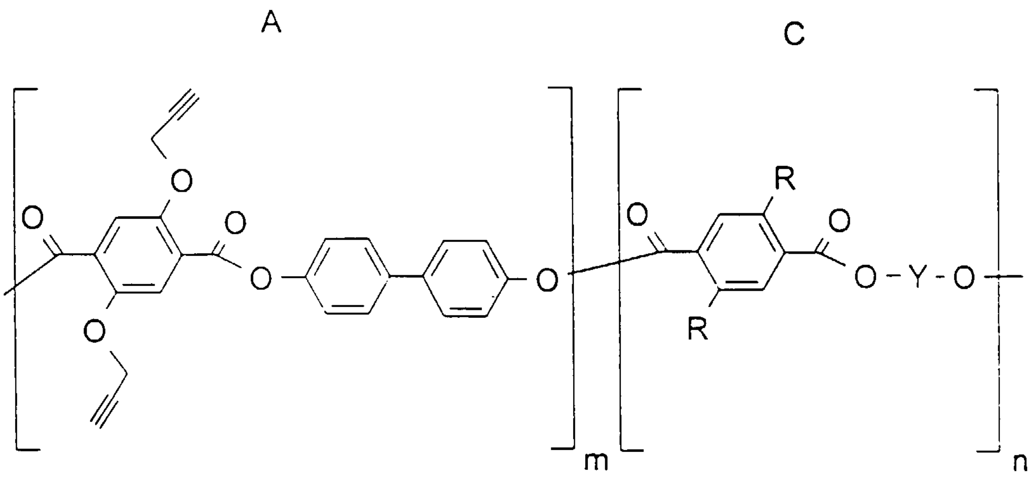

(IV)

wherein R denotes H or a linear or branched alkyloxy group having 1 to 18 C atoms and Y is defined as above.

The polyesters have a weight average molecular weight $M_w$ of 5000 to 100000, preferably of 25000 to 70000.

The production of these polyesters is also described in the simultaneously filed European patent application. In this process, the dicarboxylic acid components of the general formula (V) and optionally (VI) or the acid chlorides thereof

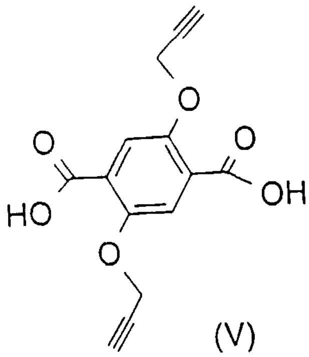

(V)

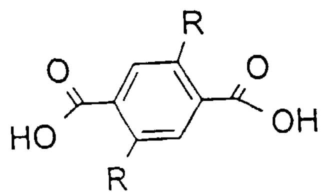

(VI)

in which R denotes H or a linear or branched-chain alkoxy group having 1 to 18 C atoms are subjected to polycondensation with the equimolar quantity of an appropriate diol or diol mixture. Suitable diols used in the process according to the invention are those capable of forming a liquid crystalline structure together with the terephthalic units. Such diols are in particular derived from dihydroxy-substituted alicyclic or aromatic hydrocarbon residues. Examples of such alicyclic or aromatic hydrocarbon residues which, as already explained above, may also be substituted by heteroatoms, are 1,1'-biphenyldiyl, 2,5-biphenyldiyl, 1,5-naphthalenediyl, 2,3-naphthalenediyl, 2,5-naphthalenediyl, 2,6-naphthalenediyl, 2,7-naphthalenediyl, 1,4-cyclohexanediyl, 2,2'-bis(4-phenyldiyl)propane, bis(4-phenyldiyl)methane, bis(4-phenyldiyl) oxide, bis(4-phenyldiyl) sulphide, bis(4-phenyldiyl) sulphone, 4,4'-stilbenediyl, azobenzenediyl, terphenyldiyl or quaterphenyldiyl.

The dicarboxylic acid components of the formulae (V) and (VI) may be synthesised, for example, using the Claisen method (L. Claisen, O. Eisleb, *Justus Liebigs Ann. Chem.,* 401, 29 (1913)) with subsequent ester cleavage or by modifying the Ballauff method (M. Ballauff, *Makromol. Chem., Rapid Commun.*, 7, 407 (1986)). The starting substance is 2,5-dihydroxyterephthalic acid diethyl or dimethyl ester, which is reacted with propargyl bromide or the corresponding bromoalkanes, potassium carbonate and potassium iodide. The intermediate product is combined with potassium hydroxide solution in order to saponify the ester groups.

The polyesters may in principle be produced from these 2,5-disubstituted terephthalic acids and the above-stated diols using known methods in which the reaction temperature does not exceed 150°C as the propargyloxy group could then polymerise.

Preferably, however, the polyesters according to the invention are produced by modifying the Dicke & Lenz

method (H.R. Dicke, R.W. Lenz, *Angew. Chem.,* 131, 95 (1985)). The substituted terephthalic acid is reacted with thionyl chloride to yield the acid chloride. This is dissolved in an inert solvent, the diol or diol mixture is added thereto in the solid state and pyridine is then added in a quantity just sufficient to dissolve the mixture.

Polycondensation proceeds over a period of at least 20 hours and at temperatures of 60 to 150°C, preferably of 80 to 120°C.

The inert solvent used is preferably a chlorinated hydrocarbon or a cyclic or non-cyclic ether of a suitable boiling point. Examples of such solvents are 1,1,2-trichloroethane, 1,1,1,2-tetrachloroethane, 1,1,2,2-tetrachloroethane, tetrachloroethylene, dichloromethane, chloroform, tetrahydrofuran and 1,2-dimethoxyethane.

The co-crosslinking agent component of the mixture according to the invention may be either a compound additionally added to the mixture or the matrix polymer, the mechanical properties of which are to be improved.

Examples of low molecular weight co-crosslinking agent components, which may be used in the mixture according to the invention are compounds such as di-n-butyl maleate, di-n-butyl fumarate, bis(4-maleimidophenyl) methane, N,N'-m-phenylenedimaleimide, N,N'-(4-methyl-m-phenylene)dimaleimide, divinylbenzene, 4,4'-bis(vinylbenzyloxy)biphenyl, 4,4'-bis-[2-(4-vinylbenzyloxy)ethoxy]biphenyl, 2,2',6,6'-tetrabromobisphenol A diallyl ether, 1,1,1-tris(4-propargyloxyphenyl)ethane, 1,1,1-tris(4-vinylbenzyloxyphenyl)ethane, aliphatic maleimides, such as for example 4-maleimidomethyl-1,8-octanedimaleimide, 1,6-bis(maleimido)hexane or 1,8-bis(maleimido)-3,6-dioxaoctane, the production of which is described in EP-A-0 284 519, propargyloxy compounds, such as for example bisphenol A dipropargyl ether, which are described in S.K. Dirlikov, *High Performance Polymers, 2,* 67 (1990), and 2,5-bis(propargyloxy)terephthalic acid dimethyl ester, which is required during production of the polyesters having lateral propargyloxy groups.

Further examples of the co-crosslinking agent component used in the mixture according to the invention comprise tris(2-maleimidoethyl)amine, tris(1-propargyloxyphenyl)ethane or tris [4-(vinylbenzyloxy)phenyl]ethane.

Examples of higher molecular weight co-crosslinking agent components are trismaleimides starting from Jeffamine® T grades, bis(3-maleimidopropyl)tetrahydrofuran 1100, bis(maleimido)oxyalkylenes of various molecular weights together with bis(vinylbenzyloxy)polytetrahydrofurans of various molecular weights.

Examples of matrix polymers which may simultaneously act as a co-crosslinking agent in the mixture according to the invention are unsaturated polyesters.

Once melted, the mixtures according to the invention form a solvent-insoluble network at above 220°C.

The ratio of propargyloxy groups of the polyester to the functional groups of the co-crosslinking agent component, relative to mol.%, may be from 10:1 to 0.4:1, preferably from 5:1 to 0.8:1.

The mixtures according to the invention have a melting point of between 80 and 220°C, preferably of between 120 and 200°C and crosslink at above 220°C. It is, however, particularly advantageous that this crosslinking proceeds without the addition of a catalyst.

The actively crosslinking polyester component of the mixtures according to the invention is liquid crystalline. If the liquid crystalline behaviour of the mixtures according to the invention is investigated, the nematic textures are retained as domains and are frozen in during crosslinking, such that the preferential orientation of the nematic phases is retained during and after crosslinking. This is advantageous in comparison with crosslinkable mixtures which do not exhibit any liquid crystalline properties as retention of the preferential orientation after crosslinking increases the reinforcing action. This reinforcement may be further increased if, prior to crosslinking, the liquid crystalline phase of the mixtures according to the invention is aligned in one direction by magnetic, electric fields, by surface treatment or by mechanical action, such as extrusion or stretching. This orientation is retained after crosslinking and brings about the additional reinforcement.

The solubility of the polyesters according to the invention in organic solvents, such as for example chloroform, pyridine, DMF and dichloromethane, is also advantageous, such that films may readily be produced by first dissolving the mixtures according to the invention in suitable solvents, applying the solution onto a surface and then vaporising the solvent.

Another advantage of the mixtures according to the invention is that, depending upon the terephthalate content of the polyester component which contains no propargyloxy groups, the network density of the polyester and the co-crosslinking agent may be adjusted, so adapting it to the particular requirements of the application.

Network structure may additionally be modified by adding up to 50% of a monofunctional co-crosslinking agent component, such as for example N-phenylmaleimide, N-cyclohexylmaleimide or 4-vinylbiphenyl. This reduces the viscosity of the mixture according to the invention and network densities are modified.

The mixtures according to the invention are suitable for the production of thermoset films and mouldings, which are to be two- and three-dimensionally stabilised.

The following Examples illustrate the invention in greater detail.

**Examples**

Production of the polyesters

Example 1

3.76 g (12.1 mmol) of 2,5-bis(propargyloxy)terephthalic acid dichloride and 18.13 g (48.3 mmol) of 2,5-bis (pentyloxy)terephthalic acid dichloride are dissolved in 200 ml of 1,1,2-trichloroethane. 7.87 g (42.3 mmol) of 4,4'-dihydroxybiphenyl and 2.90 g (18.1 mmol) of 1,5-dihydroxynaphthalene are then added in a single portion as the diol components together with 20 ml of pyridine. After 24 hours' heating to 100°C, the polymer is precipitated by being poured into methanol and then reprecipitated once more. After repeated washing with methanol and water, the product is dried under a vacuum at 60°C. A copolyester is obtained which could be positively identified by spectroscopic analysis.

Appearance: beige-coloured powder; yield: 25 g (87% of theoretical); melting: from 140°C with formation of a nematic phase.

Example 2

The same method is used as in Example 1, but using 5.01 g (16.1 mmol) of 2,5-bis(propargyloxy)terephthalic acid dichloride, 24.18 g (64.4 mmol) of 2,5-bis(pentyloxy)terephthalic dichloride, 15.0 g (80.6 mmol) of 4,4'-dihydroxybiphenyl, 250 ml of 1,1,2-trichloroethane and 30 ml of pyridine.

Appearance: beige-coloured powder; yield: 36.5 g (95% of theoretical); GPC molecular weight ($M_w$): 37530 g/mol; melting: from 200°C with formation of a nematic phase.

Example 3

The same method is used as in Example 1, but using 8.3 g (26.65 mmol) of 2,5-bis(propargyloxy)terephthalic acid dichloride, 15.00 g (39.95 mmol) of 2,5-bis(pentyloxy)terephthalic acid dichloride, 12.41 g (66.6 mmol) of 4,4'-dihydroxybiphenyl, 200 ml of 1,1,2-trichloroethane and 20 ml of pyridine.

Appearance: grey powder; yield: 27 g (87% of theoretical); melting: from 190°C with formation of a nematic phase.

Example 4

The same method is used as in Example 1, but using 15.03 g (48.3 mmol) of 2,5-bis(propargyloxy)terephthalic acid dichloride, 4.54 g (12.08 mmol) of 2,5-bis(pentyloxy)terephthalic acid dichloride, 5.62 g (30.18 mmol) of 4,4'-dihydroxybiphenyl, 4.83 g (30.19 mmol) of 1,5-dihydroxynaphthalene, 200 ml of 1,1,2-trichloroethane and 20 ml of pyridine.

Appearance: white powder; yield: 22 g (86% of theoretical); melting: from 150°C with formation of a nematic phase.

Example 5

The same method is used as in Example 1, but using 3.76 g (12.08 mmol) of 2,5-bis(propargyloxy)terephthalic acid dichloride, 18.13 g (48.3 mmol) of 2,5-bis(pentyloxy)terephthalic acid dichloride, 7.87 g (42.3 mmol) of 4,4'-dihydroxybiphenyl, 2.9 g (18.12 mmol) of 2,6-dihydroxynaphthalene, 200 ml of 1,1,2-trichloroethane and 20 ml of pyridine.

Appearance: beige-coloured powder; yield: 19.5 g (69% of theoretical); melting: from 118°C with formation of a nematic phase; an insoluble network freezing in the nematic phase is formed from 225°C.

Applications

Practical Example 1

4 g of the polyester from Example 4 are carefully mixed with 4 g of bis-(4-maleimidophenyl)methane and heated to 220°C for 60 minutes. A network is formed which is more than 99% insoluble in $CHCl_3$. DSC investigations also reveal no further post-crosslinking.

Practical Example 2

5 g of the polyester from Example 4 are carefully mixed with 4 g of N,N'-m-phenylenedimaleimide and heated to 260°C for 30 minutes. A network is formed which is 99% insoluble in $CHCl_3$. DSC investigations also reveal no further post-crosslinking.

Practical Example 3

10 g of the polyester from Example 1 are carefully mixed with 5.4 g of 4,4'-bis[2-(4-vinylbenzyloxy)ethoxy] biphenyl and heated to 250°C for 30 minutes. A network is formed which is 85% insoluble in $CHCl_3$. DSC investigations also reveal no further post-crosslinking.

Practical Example 4

10 g of the polyester from Example 2 are carefully mixed with 6.5 g of 4,4'-bis[2-(4-vinylbenzyloxy)ethoxy] biphenyl and heated to 260°C for 90 minutes. A network is formed which is more than 90% insoluble in $CHCl_3$. DSC investigations also reveal no further post-crosslinking.

Practical Example 5

20 g of the polyester from Example 3 are carefully mixed with 3 g of 1,6-bis(maleimido)hexane and heated to 240°C for 60 minutes. A network is formed which is 90% insoluble in $CHCl_3$. DSC investigations also reveal no further post-crosslinking.

Practical Example 6

10 g of the polyester from Example 4 are carefully mixed with 4 g of bis(4-maleimidophenyl)methane and heated to 220°C for 60 minutes. A network is formed which is more than 99% insoluble in $CHCl_3$. DSC investigations also reveal no further post-crosslinking.

Practical Example 7

15 g of the polyester from Example 3 are carefully mixed with 4 g of 1,8-bis(maleimido)-3,6-dioxaoctane and heated to 250°C for 60 minutes. A network is formed which is more than 90% insoluble in $CHCl_3$. DSC investigations also reveal no further post-crosslinking.

Practical Example 8

22 g of the polyester from Example 5 are carefully mixed with 12 g of 4,4'-bis[2-(4-vinylbenzyloxy)ethoxy] biphenyl and heated to 250°C for 90 minutes. A network is formed which is 90% insoluble in $CHCl_3$. DSC investigations also reveal no further post-crosslinking.

Practical Example 9

10 g of the polyester from Example 3 are carefully mixed with 3 g of tris(2-maleimidoethyl)amine and heated to 250°C for 90 minutes. A network is formed which is more than 90% insoluble in $CHCl_3$. DSC investigations also reveal no further post-crosslinking.

Practical Example 10

5 g of the polyester from Example 4 are carefully mixed at 150°C with 4.2 g of an unsaturated polyester produced from 1 part of maleic anhydride, 2 parts of phthalic anhydride, 1 part of ethylene glycol and 2 parts of propylene glycol and heated to 250°C for 60 minutes. A network is formed which is 97% insoluble in $CHCl_3$. DSC investigations also reveal no further post-crosslinking.

Practical Example 11

5 g of the polyester from Example 4 are carefully mixed at 150°C with 15 g of an unsaturated polyester

produced from 1 part of maleic anhydride, 2 parts of phthalic anhydride, 1 part of ethylene glycol and 2 parts of propylene glycol and heated to 250°C for 60 minutes. A network is formed which is 80% insoluble in $CHCl_3$. DSC investigations also reveal no further post-crosslinking.

Practical Example 12

By way of comparison with Practical Example 11, 15 g of an unsaturated polyester consisting of 1 part of maleic anhydride, 2 parts of phthalic anhydride, 1 part of ethylene glycol and 2 parts of propylene glycol are heated to 250°C for 60 minutes. Less than 3% is insoluble in $CHCl_3$.

## Claims

**1.** Crosslinkable mixture which comprises a self-crosslinking polyester comprising the repeat units A of the formula (I)

A

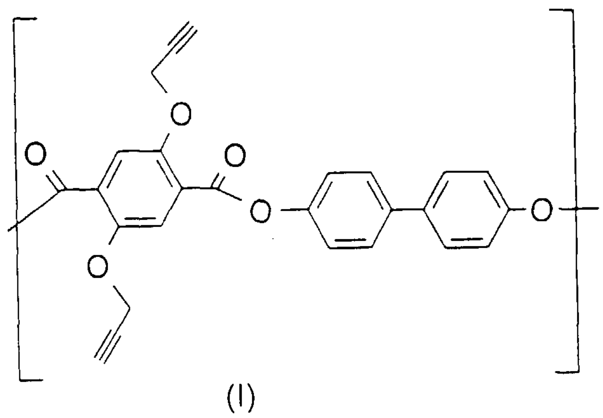

(I)

or repeat units A of the formula (I) and B of the formula (II) arranged in any desired sequence

B

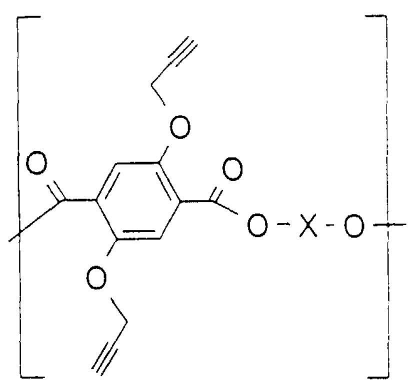

(II)

or repeat units A of the formula (I) optionally together with B of the formula (II) and C of the formula (III) arranged in any desired sequence

C

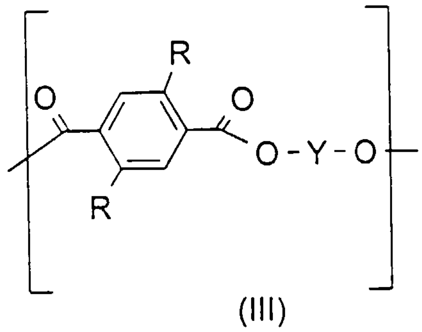

(III)

wherein R denotes H or a linear or branched alkyloxy group having 1 to 18 C atoms and X and Y each denote a different divalent alicyclic or aromatic hydrocarbon residue, which may optionally contain a heteroatom, and the molar ratio of A : (B + C) = 99:1 to 1:99, the average total number of repeat units A + B + C in the polymer molecule is in the range from 10 to 200, one of the two terminal repeat units bears a hydrogen atom on the oxy group and the other of the two terminal repeat units bears a hydroxyl group on the carbonyl group, and a co-crosslinking agent component of the formula

$$W(P)_n$$

in which n = 1 to 4, P denotes

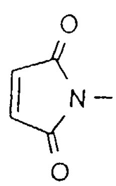 , 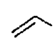 , 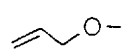 , 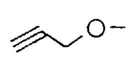

or -O-CO-CH=CH-CO-OQ
and W and Q are aliphatic, aromatic or aliphatic/aromatic.

**2.** Mixture according to claim 1, characterised in that W denotes phenylyl, alkyl-substituted phenylyl, bis(4-phenylyl) mechane, 2,2'-bis(4-phenylyl)propane, 2,2',6,6'-tetrabromobisphenol A, 1,1'-biphenylyl, 4,4'-bis(benzyloxy)biphenylyl, 4,4'-bis-[2-(benzyloxy)ethoxy]biphenylyl, 1,1,1-tris(4-phenylyl)ethane, a linear or branched alkyl or alkyloxy group having 1 to 18 C atoms.

**3.** Mixture according to one of claims 1 or 2, characterised in that the co-crosslinking agent component is di-n-butyl maleate, di-n-butyl fumarate, bis(4-maleimidophenyl)methane, N,N'-m-phenylene-dimaleimide, N,N'-(4-methyl-m-phenylene)dimaleimide, 4-maleimidomethyl-1,8-octanedimaleimide, divinylbenzene, 4,4'-bis(vinylbenzyloxy)biphenyl, 4,4'-bis-[2-(4-vinylbenzyloxy)-ethoxy]biphenyl, 2,2',6,6'-tetrabromobisphenol A diallyl ether, 1,6-bis(maleimido)hexane, 1,8-bis(maleimido)-3,6-dioxaoctane, bisphenol A dipropargyl ether, 2,5-bis(propargyloxy)terephthalic acid dimethyl ester, 1,1,1-tris(4-propargyloxyphenyl)ethane, 1,1,1-tris(4-vinylbenzyloxyphenyl)ethane and/or an unsaturated polyester.

**4.** Mixture according to claims 1 to 3, characterised in that X or Y denotes optionally substituted 1,1'-biphenyldiyl, 2,5-biphenyldiyl, 1,5-naphthalenediyl, 2,3-naphthalenediyl, 2,5-naphthalenediyl, 2,6-naphthalenediyl, 2,7-naphthalenediyl, 1,4-cyclohexanediyl, 2,2'-bis(4-phenyldiyl)propane, 2,2'-bis(4-phenyldiyl)methane, 2,2'-bis(4-phenyldiyl) oxide, 2,2'-bis(4-phenyldiyl) sulphide, 2,2'-bis(4-phenyldiyl) sulphone, 4,4'-stilbenediyl, azobenzenediyl, terphenyldiyl or quaterphenyldiyl.

5. Mixture according to one of claims 1 to 4, characterised in that the ratio of propargyloxy groups of the polyester to the functional groups of the co-crosslinking agent component, relative to mol.%, is from 10:1 to 0.4:1, preferably from 5:1 to 0.8:1.

6. Mixture according to claims 1 to 5, characterised in that it furthermore contains up to 50% of a monofunctional co-crosslinking agent component.

7. Mixture according to claims 1 to 6, characterised in that the liquid crystalline phase thereof has been aligned in one direction prior to crosslinking by magnetic, electric fields, by surface treatment and by mechanical action.

8. Use of the mixture according to claims 1 to 7 for materials having reinforcing properties, in particular as a compatibiliser, and for polymer blends and for the production of thermosetting films and mouldings.

## Patentansprüche

1. Vernetzbares Gemisch, umfassend einen selbstvernetzenden Polyester, umfassend Repetiereinheiten A der Formel (I)

A

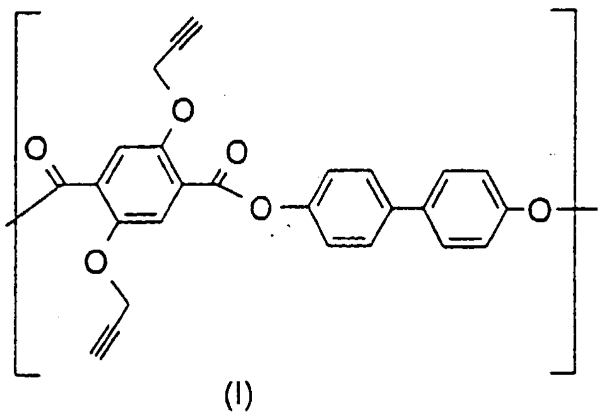

(I)

oder Repetiereinheiten A der Formel (I) und B der Formel (II), die in jeder beliebigen gewünschten Reihenfolge angeordnet sind

B

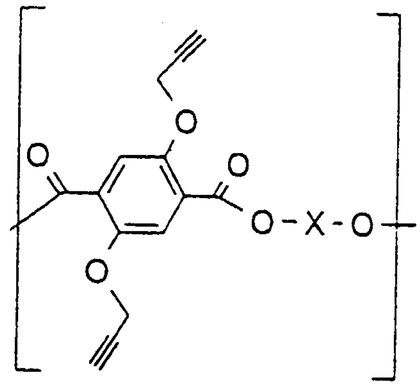

(II)

oder Repetiereinheiten A der Formel (I), gegebenenfalls zusammen mit B der Formel (II) und C der Formel (III), die in jeder beliebigen gewünschten Reihenfolge angeordnet sind

C

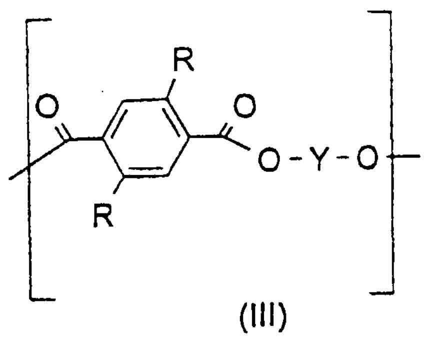

(III)

worin R für H oder eine lineare oder verzweigte Alkyloxygruppe mit 1 bis 18 Kohlenstoffatomen steht, und X und Y jeweils für einen unterschiedlichen zweiwertigen alicyclischen oder aromatischen Kohlenwasserstoffrest, der gegebenenfalls ein Heteroatom enthält, stehen und wobei das molare Verhältnis von A : (B + C) = 99:1 bis 1:99 beträgt, die mittlere Gesamtzahl der Repetiereinheiten A + B + C in dem Polymermolekül im Bereich von 10 bis 200 liegt, eine der zwei endständigen Repetiereinheiten ein Wasserstoffatom auf der Oxygruppe trägt und die andere der zwei endständigen Repetiereinheiten eine Hydroxylgruppe auf der Carbonylgruppe trägt, und eine Co-Vernetzungsmittelkomponente der Formel

$$W(P)_n$$

worin n = 1 bis 4, P für

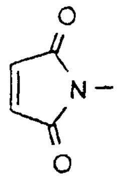 , 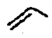 , 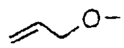 , 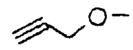

oder -O-CO-CH=CH-CO-OQ steht, und W und Q aliphatisch, aromatisch oder aliphatisch/aromatisch sind.

**2.** Gemisch nach Anspruch 1, dadurch **gekennzeichnet**, daß W für Phenylyl, alkylsubstituiertes Phenylyl, Bis(4-phenylyl)methan, 2,2'-Bis(4-phenylyl)propan, 2,2',6,6'-Tetrabrombisphenol A, 1,1'-Biphenylyl, 4,4'-Bis(benzyloxy)biphenylyl, 4,4'-Bis[2-(benzyloxy)ethoxy]biphenylyl, 1,1,1-Tris(4-phenylyl)ethan, eine lineare oder verzweigte Alkyl- oder Alkyloxygruppe mit 1 bis 18 Kohlenstoffatomen steht.

**3.** Gemisch nach Anspruch 1 oder 2, dadurch **gekennzeichnet**, daß die Co-Vernetzungsmittelkomponente Di-n-butylmaleat, Di-n-butylfumarat, Bis(4-maleimidophenyl)methan, N,N'-m-Phenylendimaleimid, N,N'-(4-Methyl-m-phenylen)dimaleimid, 4-Maleimidomethyl-1,8-octandimaleimid, Divinylbenzol, 4,4'-Bis(vinylbenzyloxy)biphenyl, 4,4'-Bis[2-(4-vinylbenzyloxy)ethoxy]biphenyl, 2,2',6,6'-Tetrabrombisphenol-A-diallylether, 1,6-Bis-(maleimido)hexan, 1,8-Bis(maleimido)-3,6-dioxaoctan, Bisphenol-A-dipropargylether, 2,5-Bis(propargyloxy)terephthalsäuredimethylester, 1,1,1-Tris(4-propargyloxyphenyl)ethan, 1,1,1-Tris(4-vinylbenzyloxyphenyl)ethan und/oder ein ungesättigter Polyester ist.

**4.** Gemisch nach den Ansprüchen 1 bis 3, dadurch **gekennzeichnet**, daß X oder Y für gegebenenfalls substituiertes 1,1'-Biphenyldiyl, 2,5-Biphenyldiyl, 1,5-Naphthalindiyl, 2,3-Naphthalindiyl, 2,5-Naphthalindiyl, 2,6-Naphthalindiyl, 2,7-Naphthalindiyl, 1,4-Cyclohexandiyl, 2,2'-Bis(4-phenyldiyl)propan, 2,2'-Bis(4-phenyldiyl)methan, 2,2'-Bis (4-phenyldiyl)oxid, 2,2'-Bis(4-phenyldiyl)sulfid, 2,2'-Bis(4-phenyldiyl)sulfon, 4,4'-Stilbendiyl, Azobenzoldiyl, Terphenyldiyl oder Quaterphenyldiyl steht.

**5.** Gemisch nach einem der Ansprüche 1 bis 4, dadurch **gekennzeichnet**, daß das Verhältnis der Propargyloxygruppen des Polyesters zu den funktionellen Gruppen der Co-Vernetzungsmittelkomponente, auf Mol-% bezogen, 10: 1 bis 0,4:1, vorzugsweise 5:1 bis 0,8:1, beträgt.

**6.** Gemisch nach den Ansprüchen 1 bis 5, dadurch **gekennzeichnet**, daß es weiterhin bis zu 50% einer monofunktionellen Co-Vernetzungsmittelkomponente enthält.

**7.** Gemisch nach den Ansprüchen 1 bis 6, dadurch **gekennzeichnet**, daß seine flüssigkristalline Phase vor der Vernetzung durch magnetische, elektrische Felder, durch Oberflächenbehandlung und durch mechanische Einwirkung in einer Richtung ausgerichtet worden ist.

**8.** Verwendung des Gemisches nach den Ansprüchen 1 bis 7 für Materialien mit Verstärkungseigenschaften, insbesondere als Kompatibilisierungsmittel, und für Polymerblends sowie für die Herstellung von wärmehärtenden Filmen und Formkörpern.

## Revendications

**1.** Mélange réticulable qui comprend un polyester autoréticulant comprenant les unités répétées A de formule (I)

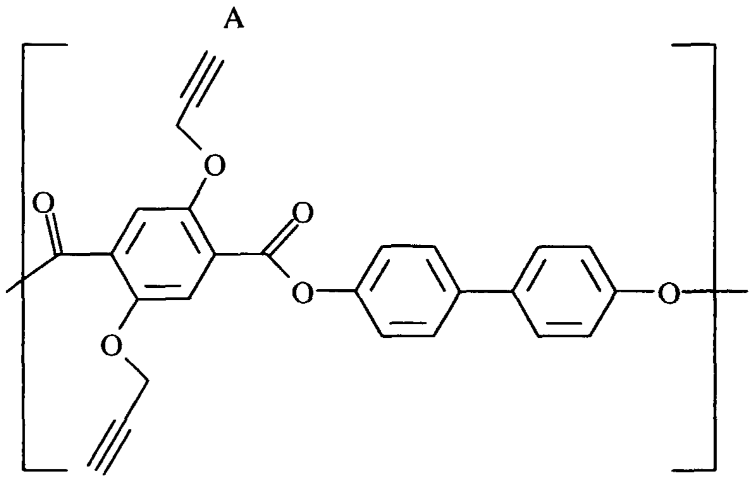

(I)

ou des unités répétées A de formule (I) et des unités répétées B de formule (II) disposées dans un ordre voulu quelconque

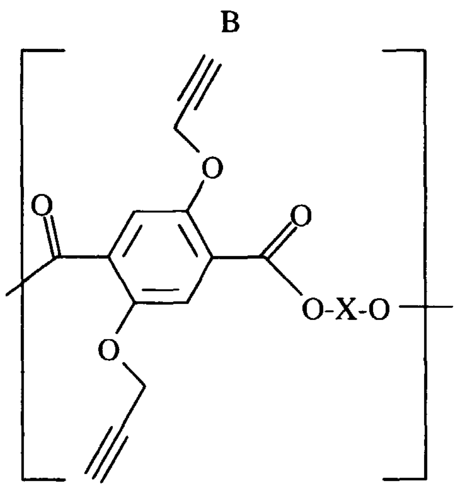

(II)

ou des unités répétées A de formule (I) éventuellement en même temps que des unités répétées B de formule (II) et des unités répétées C de formule (III) disposées dans un ordre voulu quelconque

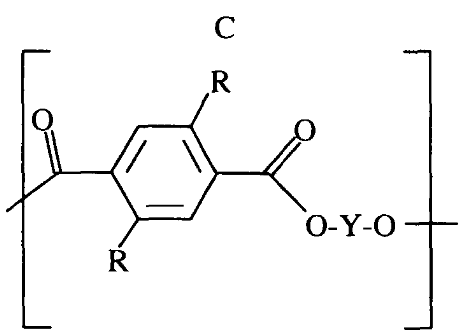

(III)

où R désigne H ou un groupe alkyloxy linéaire ou ramifié ayant 1 à 18 atomes de carbone et X et Y désignent chacun un résidu hydrocarboné alicyclique ou aromatique divalent différent qui peut éventuellement contenir un hétéroatome, et le rapport molaire A : (B+C)=99:1 à 1:99, le nombre total moyen d'unités répétées A + B + C dans la molécule de polymère est situé dans le domaine de 10 à 200, l'une des deux unités répétées terminales porte un atome d'hydrogène sur le groupe oxy et l'autre des deux unités répétées terminales porte un groupe hydroxyle sur le groupe carbonyle, et un composant agent co-réticulant de formule

$$W(P)_n$$

dans laquelle n = 1 à 4, P désigne

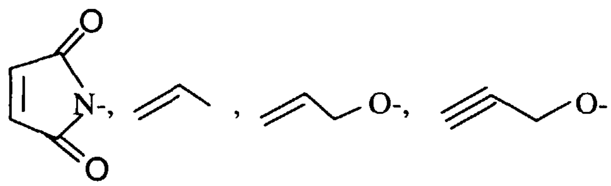

ou -O-CO-CH=CH-CO-OQ
et W et Q sont aliphatiques, aromatiques ou aliphatiques/aromatiques.

**2.** Mélange selon la revendication 1, caractérisé en ce que W désigne un groupe phénylyle, phénylyle alkyl-substitué, bis(4-phénylyl)méthane, 2,2'-bis(4-phénylyl)propane, 2,2',6,6'-tétrabromobisphénol A, 1,1'-biphénylyle, 4,4'-bis(benzyloxy)biphénylyle, 4,4'-bis-[2-(benzyloxy)éthoxy]biphénylyle, 1,1,1-tris(4-phénylyl)éthane, un groupe alkyle ou alkyloxy linéaire ou ramifié ayant 1 à 18 atomes de carbone.

**3.** Mélange selon l'une des revendications 1 et 2, caractérisé en ce que le composant agent co-réticulant est le maléate de di-n-butyle, le fumarate de di-n-butyle, le bis(4-maléimidophényl)méthane, le N,N'-m-phénylènedimaléimide, le N,N'-(4-méthyl-m-phénylène)dimaléimide, le 4-maléimidométhyl-1,8-octane-dimaléimide, le divinylbenzène, le 4,4'-bis(vinylbenzyloxy)biphényle, le 4,4'-bis-[2-(4-vinylbenzyloxy)éthoxy]biphényle, le diallyléther de 2,2',6,6'-tétrabromobisphénol A, le 1,6-bis(maléimido)hexane, le 1,8-bis(maléimido)-3,6-dioxaoctane, le dipropargyléther de bisphénol A, le 2,5-bis(propargyloxy)téréphtalate de diméthyle, le 1,1,1-tris(4-propargyloxyphényl)éthane, le 1,1,1-tris(4-vinylbenzyloxyphényl)éthane et/ou un polyester insaturé.

**4.** Mélange selon les revendications 1 à 3, caractérisé en ce que X ou Y désigne 1,1'-biphényldiyle, 2,5-biphényldiyle, 1,5-naphtalènediyle, 2,3-naphtalènediyle, 2,5-naphtalènediyle, 2,6-naphtalènediyle, 2,7-naphtalènediyle, 1,4-cyclohexanediyle, le 2,2'-bis(4-phényldiyl)propane, le 2,2'-bis(4-phényldiyl)méthane, l'oxyde de 2,2'-bis(4-phényldiyle), le sulfure de 2,2'-bis(4-phényldiyle), la 2,2'-bis(4-phényldiyl)sulfone, 4,4'-stilbènediyle, azobenzènediyle, terphényldiyle ou quaterphényldiyle éventuellement substitué.

**5.** Mélange selon l'une des revendications 1 à 4, caractérisé en ce que le rapport des groupes propargyloxy du polyester aux groupes fonctionnels du composant agent co-réticulant, en mol%, est de 10:1 à 0,4:1, de préférence de 5:1 à 0,8:1.

**6.** Mélange selon les revendications 1 à 5, caractérisé en ce qu'il contient en outre jusqu'à 50 % d'un composant agent co-réticulant mono-fonctionnel.

**7.** Mélange selon les revendications 1 à 6, caractérisé en ce que sa phase cristalline liquide a été alignée dans une direction avant la réticulation par des champs magnétiques, électriques, par traitement de surface et par action mécanique.

**8.** Utilisation du mélange selon les revendications 1 à 7 pour des matériaux ayant des propriétés renforçantes, en particulier comme compatibilisant, et pour des mélanges de polymères et pour la production de films et objets moulés thermodurcissables.